# EUROPÄISCHE PATENTANMELDUNG

(11) **EP 3 937 348 A1**
(43) Veröffentlichungstag der Anmeldung: **12.01.2022**
(21) Anmeldenummer: 20185020.3
(22) Anmeldetag: 09.07.2020
(51) Int. Cl.: H02K 1/16, H02K 1/26, H02K 15/02

(54) **BLECHPAKETSEGMENT UND VERFAHREN ZU DESSEN HERSTELLUNG**

(71) Anmelder: Siemens Aktiengesellschaft, 80333 München (DE)
(72) Erfinder: Adlfinger, Helmut, 90571 Schwaig b. Nürnberg (DE); Lindmeier, Andreas, 94099 Ruhstorf (DE); Ratzisberger, Dominik, 94149 Kößlarn (DE); Jöckel, Andreas, 90408 Nürnberg (DE); Schober, Franz Xaver Michael, 94154 Neukirchen vorm Wald (DE)
(74) Vertreter: Michalski Hüttermann & Partner Patentanwälte mbB

(57) **Zusammenfassung**

Die Erfindung betrifft ein Blechpaketsegment (11) aus axial geschichteten Blechen(1), wobei jedes Blech (1) ein Joch (6) mit Nuten (3) und Zähnen (4) aufweist, wobei die Zähne (4) durch einen Jochrücken (7) verbunden sind und wobei zumindest einige Zähne (4) auf der den Nuten (3) abgewandten Seite der Bleche (1) axial fluchtende Ausnehmungen (5) aufweisen.

## Beschreibung

Die Erfindung betrifft ein Blechpaketsegment einer dynamoelektrischen rotatorischen Maschine, eine dynamoelektrische rotatorische Maschine mit derartigen Blechpaketsegmenten und ein Verfahren zur Herstellung von derartigen Blechpaketsegmenten.

Üblicherweise werden Statorwicklungen von Motoren sowie Generatoren in Form von Spulen in dafür vorgestanzte Nutenbleche eingebracht. Je nach Größe der Maschine ist es notwendig diese Statorbleche dabei in Umfangsrichtung zu segmentieren (teilen), da Elektrobleche nur in begrenzter Breite von den Walzwerken erzeugt werden.

Um die Abfallmenge, also den Blechschrott zu reduzieren sind aus den Dokumenten US 2005/073210 A1 und DE 10 2010 031 105 A1 spiralförmig aufgebaute Blechpakete bekannt. Nachteilig dabei ist, dass sich ein partielles Aufwölben der Bleche einstellt, die ordnungsgemäßes Paketieren erschweren.

Ausgehend davon liegt der Erfindung die Aufgabe zugrunde den Blechschnitt bei segmentierten rotatorischen Maschinen in einfacher Art und Weise weiter zu reduzieren. Die Effizienz der Herstellung und der Maschine soll dabei gesteigert werden.

Die Lösung der gestellten Aufgabe gelingt durch ein Blechpaketsegment aus axial geschichteten Blechen, wobei jedes Blech ein Joch mit Nuten und Zähnen aufweist, wobei die Zähne durch einen Jochrücken verbunden sind und wobei zumindest einige Zähne auf der den Nuten abgewandten Seite der Bleche axial fluchtende Ausnehmungen aufweisen.

Die Lösung der gestellten Aufgabe gelingt auch durch eine dynamoelektrische rotatorische Maschine mit einem großen Durchmesser, wobei ein Stator und/oder ein Rotor in Umfangsrichtung segmentiert aufgebaut sind, wobei zumindest der Stator in Umfangsrichtung angeordnete erfindungsgemäße Blechpaketsegmente aufweist.

Die Lösung der gestellten Aufgabe gelingt auch durch ein Verfahren zur Herstellung eines erfindungsgemäßen Blechpaketsegments durch folgende Schritte:
- Austanzen bzw. Lasern von Blechen aus einem Blechcoil mit vorgegebener Breite, wobei die Bleche ein Joch mit Nuten und Zähnen aufweisen, wobei die Zähne durch einen Jochrücken verbunden sind und wobei am Jochrücken im Bereich zumindest einiger Zähne auf der den Nuten abgewandten Seite der Bleche in Längserstreckung erstreckende Ausnehmungen vorgesehen werden, wobei die Begrenzungskante des Jochrückens senkrecht zur Längserstreckung des Blechcoils ist,
- Paketieren der Bleche zu einem Blechpaketsegment derart, dass sich axial fluchtende Ausnehmungen des Blechpaketsegments ergeben, so dass sich eine Krümmung eines Luftspalts der elektrischen Maschine einstellen lässt.

Erfindungsgemäß werden nunmehr die Bleche für eine Blechpaketsegment nicht mehr in Teilkreisform gestanzt oder gelasert, sondern gerade. Dabei wird für rotatorische Maschinen mit Außenläufer oder Innenläufer für eine spätere Biegung gezielt dementsprechend Material aus dem Jochbereich entnommen, um ein partielles Aufwölben der Bleche beim Biegen weitestgehend zu vermeiden.

Mit anderen Worten, die Begrenzungskanten der Jochrücken sind senkrecht zu der Längserstreckung des Blechcoils. Des Weiteren weist der Jochrücken Ausnehmungen, also Materialentnahmen, auf, die ein Biegen der Bleche gestatten, ohne dass sich die Bleche beim Biegen aufwölben. Bei dieser rein plastischen Verformung fließt Material in unterschiedliche Dicken der Bleche hinein.

Die Erfindung lässt sich für Statoren und Rotoren in segmentierter Bauweise einsetzen.

Die Erfindung lässt sich auch bei Innen- und Außenläufer-Maschinen umsetzen. Während bei einem Innenläufer der Stator die Ausnehmungen beim Biegevorgang öffnen, werden die Ausnehmungen, insbesondere bei dementsprechender Materialentnahme bei einem Außenläufer nahezu geschlossen.

Ein weiterer Vorteil ist, dass die Walzrichtung ideal parallel zur Nuten-/Zahnrichtung ausfällt, was insbesondere bei kornorientiertem Elektroblech die Permeabilität in Walzrichtung komplett 100% in Zahnrichtung hält und damit die Flussführung optimiert und die Maschineneffizienz steigert.

Durch die erfindungsgemäße Bereitstellung der Bleche wird eine verbesserte, also kompaktere Paketierung der Bleche bzw. Blechsegmente erreicht.

Insbesondere lassen sich nunmehr gerade Bleche bei einem passenden Nut-/Zahnbreitenverhältnis ideal ineinandergreifend auf dem Blechcoil anordnen, wodurch sich der Blech-Verschnitt erheblich reduziert.

Je nach Radius von Stator oder Rotor sind unterschiedliche Biegeradien vorzusehen, dabei ist zwischen den erforderlichen Ausnehmungen, was die Formgebung (rechteckförmig, keilförmig, trapezförmig) und der Tiefe in den Jochrücken abzustellen.

Die Erfindung sowie weitere Ausgestaltungen der Erfindung werden anhand prinzipiell dargestellter Ausführungsbeispiele näher erläutert, darin zeigen:
- FIG 1: Stand der Technik der Stanzvorgänge,
- FIG 2: Erfindungsgemäßes Stanzen,
- FIG 3: Detailansicht eines Blechs,
- FIG 4: perspektivische Darstellung eins Blechsegments,
- FIG 5: prinzipiellen Querschnitt einer dynamoelektrischen rotatorischen Maschine,
- FIG 6: Windkraftanlage mit einem Generator.

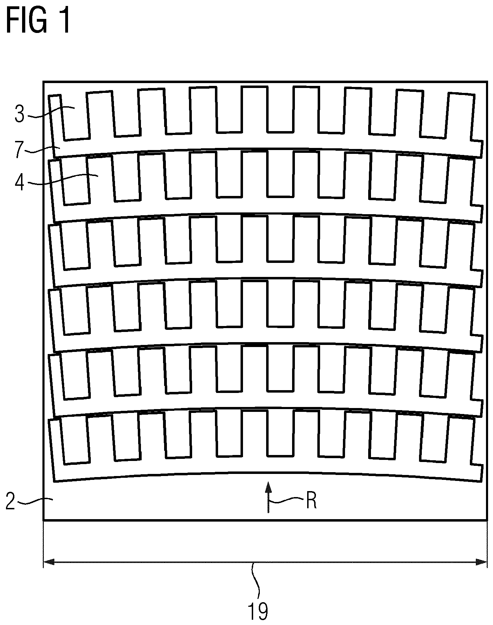

Bleche 1 bzw. Blechsegmente von Statoren 9 und/oder Rotoren 8 dynamoelektrischer großer Maschinen, wie Generatoren 12 von Windkraftanlagen werden bevorzugt so bemessen, dass die maximale Breite 19 eines Blechcoils 2 ausgenutzt wird. Jedoch können diese Bleche 1 gemäß FIG 1 nur untereinander, oder nebeneinander auf das Blechcoil 2 angeordnet werden.

FIG 1 zeigt ein Blechcoil 2 mit einer Teilkreisform mit dem Radius R. Das Blechcoil 2 hat eine Breite 19, die von den Walzwerken vorgegeben ist. Durch das vorgegebene Stanz- oder Lasermuster eines vorgegebenen Blechschnitts tritt dadurch ein vergleichsweise größerer Blechabfall auf.

Die einzelnen Bleche 1, die ein Joch 6 bilden, weisen Zähne 4 auf, die von Nuten 3 beabstandet sind. Die Zähne 4 eines Blechs 1 sind durch einen Jochrücken 7 verbunden.

Die Bleche 1 sind in Teilkreisform mit dem Radius R gestanzt. Die ausgestanzten Nuten 3 und die Zwischenbereiche benachbarter Bleche 1 sind dabei Reinverschnitt, der verschrottet werden muss. Dadurch gibt es Verschnitt-Quoten von teilweise bis zu 50%.

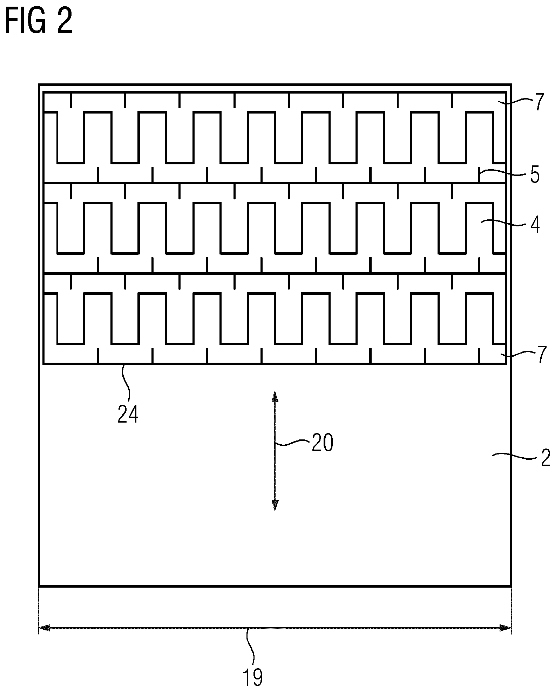

FIG 2 zeigt nun die erfindungsgemäße Art der Bearbeitung eines vorhandenen Blechcoils 2. Dabei wird senkrecht zu einer Walzrichtung 20 des Blechs 1 die Begrenzungskante 24 des Jochrückens 7 angeordnet. Dadurch können insbesondere im Idealfall je nach Breiten der Nuten 3 und Zähne 4 diese verschachtelt angeordnet werden und so der Blechabfall reduziert werden. Um jedoch nunmehr Blechpaketsegmente 11 einer dynamoelektrischen rotatorischen Maschine zu gestalten, ohne dass sich Bleche 1 beim Biegen partiell Aufwölben und so eine Paketierung erschweren, wurden zusätzlich in Walzrichtung 20 Ausnehmungen 5 in die Jochrücken 7 eingestanzt oder gelasert.

Dadurch wird durch einen Biegevorgang ein Blechpaketsegment 11 eines Stators 9 oder Rotors 8 erhalten. Diese Ausnehmungen 5 sind insbesondere im Bereich der Zähne 4 angeordnet, wobei deren Form als auch deren Tiefe in Walzrichtung 20 durch den späteren Biegeradius R vorgegeben ist. Die parallel zueinander ausfallenden Nutenzähnen eines geraden Blechs sind dabei alle in direkter Walzrichtung 20 ausgerichtet.

Ein weiterer Vorteil ist, dass die Walzrichtung 20 der Bleche 1 nunmehr ideal parallel zur Nuten-/Zahnrichtung ausfällt, was insbesondere bei kornorientiertem Elektroblech die Permeabilität in Walzrichtung komplett 100% in Zahnrichtung hält und damit die Flussführung optimiert. Dies steigert die Effizienz der dynamoelektrischen Maschine.

Grundsätzlich ist der spezifische Blechradius dabei das eigentliche Problem. Bei Ausführung mit gerader Stanz- bzw. Laserkontur können die Bleche 1 bis auf wenige Millimeter zusammen und bei passendem Nut-/Zahn-Verhältnis sogar ineinandergeschoben werden. Dadurch wird der Blechabfall auf ein Minimum reduziert. Anfallender Blechverschnitt muss mitbezahlt werden, der Brutto-Blecheinsatz ist also sehr hoch. Daher wirkt sich diese erfindungsgemäße Optimierung erheblich auf die Produkt-Materialkosten aus, da Elektroblech einer der großen Kostentreiber von Elektromaschinen ist.

Ein weiterer Vorteil ist, dass die Walzrichtung 20 ideal parallel zur Nuten-/Zahnrichtung ausfällt, was insbesondere bei kornorientiertem Elektroblech die Permeabilität in Walzrichtung komplett 100% in Zahnrichtung hält und damit die Flussführung optimiert. Damit ergibt sich eine ideelle Ausrichtung jedes einzelnen Zahnes 4 und jeder Nut 3, was zu der verbesserten Flussführung führt.

Die Einbringung einer Ausnehmung 5 oder einer "Schlüssellochkerbe" im Jochrücken 7 gewährleistet eine gezielte Biegung mit einem vorgegebenen Radius R im Jochbereich. Ein Vorbiegen mittels Biegevorrichtungen vor Beschichtung eines Blechpaketsegments 11, oder ein Biegen während des Schichtprozesses der Bleche des Blechpaketsegments 11 sind dabei denkbar.

Die parallel zueinander ausgerichteten Zähnen 4 eines geraden Blechs sind dabei alle in direkter Walzrichtung ausgerichtet. Durch die anschließende Biegung werden die Zähne 4 eines Stators 9 bei einem Außenläufer aufgespreizt und die Ausnehmungen 5 schließen sich. Dementsprechend werden die Zähne 4 eines Stators 9 bei einem Innenläufer so gebogen, dass sich die Ausnehmungen 5 öffnen.

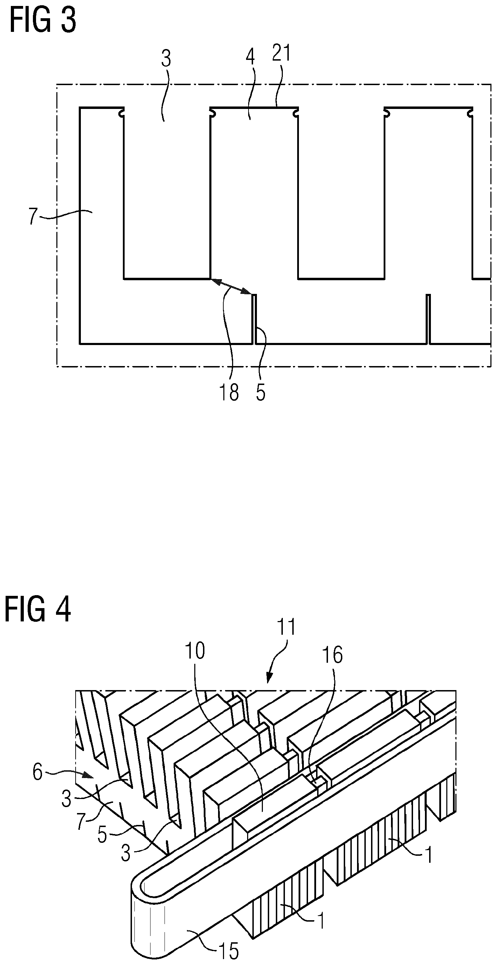

FIG 3 zeigt in einer Detaildarstellung einen Ausschnitt eines Blechs 1. Dabei sind die Ausnehmungen 5 als Schlitz im Bereich des Jochrückens 7 der Zähne 4 angeordnet. Dies hat den Vorteil, dass eine ausreichende Stegdicke 18 vorhanden ist, die Flussführung vom Zahn 4 über den Jochrücken zu den benachbarten Zähnen 4 nur vergleichsweise gering beeinträchtigt. Durch die Tiefe der Ausnehmung 5, und/oder der Form und/oder der Position der Ausnehmungen im Jochrücken 7 kann der Biegeradius R beeinflusst werden. Im Zahnkopf 21 der Zähne 4 sind eingestanzte Einkerbungen für einen Nutverschluss vorhanden.

Je nach Sprödheit, Dicke und Glühgrad des Materials wäre ein Biegen ohne die erfindungsgemäßen Ausnehmungen 5, ähnlich eines "Slinky / Helicoil" -Verfahrens denkbar (rein plastische Verformung - Material fließt in unterschiedliche Dicken hinein) .

FIG 4 zeigt in einer Teilperspektive ein Blechpaketsegment 11, das aus einzelnen Blechen 1 aufgebaut ist, wobei das Blechpaketsegment 11 sich in axiale Teilblechpaketen 10 unterteilt, die im Betrieb einer dynamoelektrischen rotatorischen Maschine, beispielsweise eines Generators 12 eine zusätzliche Kühlung gestatten. Die Teilblechpakete 10 sind durch Abstandshalter 16 axial voneinander getrennt. Beispielhaft ist eine Spule 15 in einer Nut 3 des Blechpaketsegments 11 angeordnet. Druckplatten paketieren die Blechpaketsegmente 11.

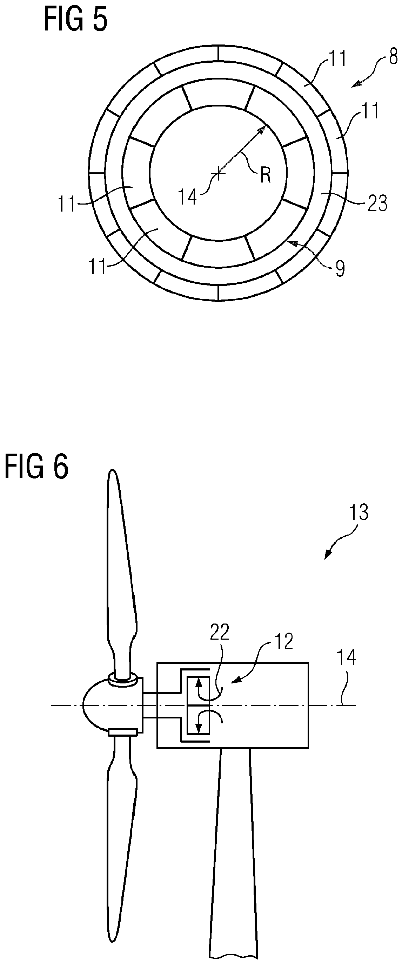

FIG 5 zeigt in einem Querschnitt eine beispielhafte Ausführung einer dynamoelektrischen rotatorischen Maschine beispielsweise eines Generators 12 ohne Wicklungssystem, die als Außenläufer ausgeführt ist. Ein Stator 9 ist in Umfangsrichtung durch Blechpaketsegmente 11 mit einem Radius R aufgebaut. Die einzelnen Segmente sind dabei, beispielsweise wie in FIG 4, ausgeführt. Durch die Ausnehmungen 5 im Jochrücken 7 lässt sich der Radius R in einfacher Art und Weise gestalten. Ein Rotor 8, der durch einen Luftspalt 23 vom Stator 9 beabstandet ist und sich um eine Achse 14 dreht, kann ebenfalls durch erfindungsgemäße Blechpaketsegmente 11 aufgebaut sein.

FIG 6 zeigt eine prinzipiell dargestellte Windkraftanlage 13 mit einem direkt angetriebenen Generator 12, der als Außenläufer ausgeführt ist. Kühlluftströme 22 treten dabei bei dem Stator 9 über Kühlkanäle in das Blechpaket.

## Patentansprüche

1. Blechpaketsegment (11) aus axial geschichteten Blechen(1), wobei jedes Blech (1) ein Joch (6) mit Nuten (3) und Zähnen (4) aufweist, wobei die Zähne (4) durch einen Jochrücken (7) verbunden sind und wobei zumindest einige Zähne (4) auf der den Nuten (3) abgewandten Seite der Bleche (1) axial fluchtende Ausnehmungen (5) aufweisen.

2. Blechpaketsegment (11) nach Anspruch 1, **dadurch gekennzeichnet , dass** die Ausnehmungen (5) keil-, trapez- oder rechteckförmig ausgestaltet sind.

3. Blechpaketsegment (11) nach einem der vorhergehenden Ansprüche, **dadurch gekennzeichnet, dass** der Jochrücken (7) derart gebogen ist, dass die Ausnehmung (5) geschlossen oder geöffnet sind.

4. Dynamoelektrische rotatorische Maschine mit einem großen Durchmesser, wobei ein Stator (9) und/oder ein Rotor (8) in Umfangsrichtung segmentiert aufgebaut sind, wobei zumindest der Stator (9) in Umfangsrichtung angeordnete Blechpaketsegmente (11) nach einem der Ansprüche 1 bis 3 aufweist.

5. Verfahren zur Herstellung eines Blechpaketsegments (11) nach einem der Ansprüche 1 bis 3 durch folgende Schritte:
- Austanzen bzw. Lasern von Blechen (1) aus einem Blechcoil (2) mit vorgegebener Breite (19), wobei die Bleche (1) ein Joch (6) mit Nuten (3) und Zähnen (4) aufweisen, wobei die Zähne (4) durch einen Jochrücken (7) verbunden sind und wobei am Jochrücken (7) im Bereich zumindest einiger Zähne (4) auf der den Nuten (3) abgewandten Seite der Bleche (1) in Längserstreckung erstreckende Ausnehmungen (5) vorgesehen werden, wobei die Begrenzungskante (24) des Jochrückens (7) senkrecht zur Längserstreckung des Blechcoils (2) ist,
- Paketieren der Bleche (1) zu einem Blechpaketsegment (11) derart, dass sich axial fluchtende Ausnehmungen (5) des Blechpaketsegments (11) ergeben, so dass sich eine Krümmung eines Luftspalts (23) der elektrischen Maschine einstellen lässt.

6. Verfahren nach Anspruch 5, **dadurch gekennzeichnet, dass** beim Stanzvorgang die Zähne (4) in die Nuten (3) eingreifen, wobei die Breite der Nuten (3) der Breite der Zähne (4) entspricht.

7. Verfahren nach Anspruch 5 oder 6, **dadurch gekennzeichnet, dass** während oder nach dem Paketieren der Bleche (1) ein Biegen erfolgt, derart, dass sich dadurch die Ausnehmungen (5) verändern (Öffnen oder Schließen) und sich so die Luftspaltkrümmung der dynamoelektrischen rotatorischen Maschine einstellen lässt.

8. Verfahren nach Anspruch 5, 6, oder 7, **dadurch gekennzeichnet , dass** die Ausnehmungen (5), insbesondere als Schlitze im Jochrücken (7) auf Höhe der Zähne (4) eingestanzt werden.
